# EUROPÄISCHE PATENTANMELDUNG

(11) **EP 1 055 361 A1**
(43) Veröffentlichungstag der Anmeldung: **29.11.2000**
(21) Anmeldenummer: 00110398.5
(22) Anmeldetag: 16.05.2000
(51) Int. Cl.: A01D 61/02, B65G 23/44

(54) **Schneidwerk mit Fördergut und Spannmechanismus**

(30) Priorität: 27.05.1999 US 321327
(71) Anmelder: DEERE & COMPANY, Moline, Illinois 61265-8098 (US)
(72) Erfinder: Watts, Bradley James, Eldridge, IA 52748 (US); Kmoch, David Walter, Geneseo, IL 61254 (US); Teller, Thomas G., Fabribault, MN 55021 (US); Hulscher, Jay T., Golden Valley, MN 55021 (US)
(74) Vertreter: Holst, Sönke, Dr.

(57) **Zusammenfassung**

Die Erfindung bezieht sich auf ein Schneidwerk (10) mit einem Fördergurt (28, 30) und einem Spannmechanismus (70), mit zwei Walzen (56, 60), um die der Fördergurt (28, 30) umläuft, von denen wenigstens eine antreibbar ist, und von denen eine erste Walze (60) relativ zur zweiten Walze (56) in Längsrichtung des Fördergurtes (28, 30) verschiebbar gelagert ist. Um stets eine optimale Spannung des Fördergurtes zu erreichen, wird vorgeschlagen, dass eine Feder (116) die erste Walze (60) mit einer von der zweiten Walze (60) fortgerichteten Kraft beaufschlagt.

## Beschreibung

Die Erfindung betrifft ein Schneidwerk mit einem Fördergurt und einem Spannmechanismus, mit zwei Walzen, um die der Fördergurt umläuft, von denen wenigstens eine antreibbar ist, und von denen eine erste Walze relativ zur zweiten Walze in Längsrichtung des Fördergurtes verschiebbar gelagert ist.

Schneidwerke mit Fördergurten für Ernteausrüstungen haben ein flaches, breites Band, das als Fördergurt oder -tuch bezeichnet wird und zum Transport von Erntegut dient. Die Anordnung und Anzahl der Fördergurte variiert bei unterschiedlichen Schneidwerken. Eine Art von Schneidwerk mit Fördergurt hat zwei seitliche Fördergurte, die Erntegut seitlich zur Mitte des Schneidwerks transportieren, wo ein mittlerer Fördergurt das Erntegut in Längsrichtung in eine Erntemaschine transportiert. Jeder Fördergurt umläuft ein Walzenpaar, von denen eine Walze angetrieben wird und eine mitläuft. Es ist nötig, eine vorbestimmte Spannung im Fördergurt aufrechtzuerhalten, damit es ordnungsgemäß funktioniert. Eine minimale Spannung ist nötig, um Schlupf des Fördergurtes auf der angetriebenen Walze zu vermeiden, während übermäßige Spannung des Fördergurtes die Lebensdauer des Fördergurtes vermindert.

Eine Art von Spannmechanismen benutzt Kabel und Seilscheiben, um die mitlaufende Walze zu positionieren. Sobald die mitlaufende Walze positioniert ist, wird sie an ihrem Platz fixiert. Jedes Mal, wenn der Fördergurt einer Einstellung bedarf, muss der Bediener die mitlaufende Walze freigeben, sie neu positionieren und sie dann wieder sichern. Eine Einstellung der Spannung des Fördergurtes ist regelmäßig notwendig, insbesondere bei einem neuen Band, da es sich während der ersten Betriebsstunden ausdehnt. Eine Einstellung der Spannung des Bandes ist auch wegen sich ändernder Erntegutbedingungen notwendig. Eine große Belastung mit Erntegut kann eine höhere Spannung des Gurtes erfordern, um Schlupf zu vermeiden. Bei einem Spannsystem, das ein Fixieren der Position der mitlaufenden Walze erfordert, ist die Einstellung ein zeitaufwändiger Prozess und es ist mitunter nicht möglich, festzustellen, ob die Spannung korrekt ist.

Die der Erfindung zugrunde liegende Aufgabe wird darin gesehen, einen Spannmechanismus des Fördergurtes für ein Schneidwerk bereitzustellen, der einfach aufgebaut ist, jedoch die nötige Spannung des Fördergurtes zuverlässig gewährleistet.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt vor, eine erste Walze relativ zur zweiten Walze verschiebbar zu lagern, und die erste Walze mit der Kraft einer Feder zu beaufschlagen, die die erste Walze von der zweiten Walze hinwegdrückt. Auf diese Weise wird ein aktiver Spannmechanismus bereitgestellt, bei dem die erste Walze, bei der es sich um die angetriebene Walze, aber vorzugsweise um die nicht angetriebene, mitlaufende Walze handeln kann, nicht an einer Stelle befestigt wird, sondern stets durch den Spannmechanismus vorgespannt wird.

Ein Vorteil der vorliegenden Erfindung besteht darin, dass die erste Walze sich bewegen kann, um die Spannung des Fördergurtes in dem Fall aufrechtzuerhalten, dass auf den Fördergurt eine äußere Kraft ausgeübt wird, die eine Bewegung der ersten Walze bedingt.

Der erfindungsgemäße Spannmechanismus umfasst vorzugsweise eine Verbindung mit einem Winkelhebel, der mit der ersten Walze gekoppelt ist. Eine Feder, vorzugsweise eine Druckfeder, dreht beispielsweise über einen Stab den Winkelhebel, der die erste Walze von der zweiten Walze fortdrückt, um den Fördergurt zu spannen.

Die erste Walze kann an beiden Enden an verschiebbaren (Gleit-) Klammern angebracht sein, die eine durch die Kraft der Feder bewirkte Verschiebung der ersten Walze in Längsrichtung des Fördergurtes erlauben. Die Gleitklammern sind durch einen Spannbalken, der sich quer zum Fördergurt erstreckt, untereinander und mit dem Winkelhebel verbunden. Denkbar wäre auch, jede Gleitklammer mit einer zugeordneten Feder vorzuspannen, jedoch gewährleistet der Spannbalken eine symmetrische Kraftbeaufschlagung der Gleitklammern, insbesondere bei einer veränderbaren Federkraft. Aus Symmetriegründen greift der Winkelhebel vorzugsweise in der Mitte des Spannbalkens an. Die Verbindung zwischen Winkelhebel und Spannbalken kann durch ein verschiebbares Element erfolgen.

Vorzugsweise ist der die Feder mit der ersten Walze verbindende Mechanismus im Inneren des vom Fördergurt umschlossenen Raums angeordnet. An dieser Stelle ist der Mechanismus im wesentlichen vor Schmutz und Verunreinigungen sowie Beschädigung geschützt.

Die Feder und der sie mit dem Winkelhebel verbindende Stab sind hingegen bevorzugt außerhalb eines Rahmens angeordnet, der den Fördergurt und den Spannmechanismus trägt, und somit an einer Stelle, an der die Feder und ein zur Einstellung ihrer Spannung dienendes Element, wie z. B. eine Schraube, leicht zur Einstellung der Spannung des Fördergurtes zugänglich sind.

Weiterhin wird vorgeschlagen, eine Federlehre in Form einer geschweißten Platte bereitzustellen, die sich entlang der Feder erstreckt, um die Soll-Länge der Feder anzuzeigen, bei der sie die empfohlene Spannung im Fördergurt erzeugt.

Die Lehre kann zusätzlich mit Zeichen versehen sein, die eine Stellung der Feder bei größerer Spannung des Fördergurtes anzeigen.

Falls möglich, sind die Feder und die Federlehre an einer Stelle angeordnet, an der sie von der Kabine einer mit dem Schneidwerk verbundenen Erntemaschine aus einsehbar sind.

Dadurch wird einem Bediener möglich, die Spannung des Fördergurtes festzustellen, ohne die Kabine zu verlassen.

Die verschiebbare Lagerung der ersten Walze kann durch ein Paar von Gleitklammern erfolgen, die mit einem Gleitstab versehen sind, der in einem Kanalelement verschiebbar gelagert ist. Das Kanalelement kann an einem Seitenelement eines den Fördergurt tragenden Rahmens angebracht sein.

Der Gleitstab kann im Kanalelement durch eine Lagerung, die vorzugsweise aus zwei Lagerhälften aufgebaut ist, verschiebbar gelagert sein.

Der Gleitstab ist insbesondere unrund, z. B. hexagonal. Dabei ist es zweckmäßig, die Lagerung des Gleitstabs im Kanalelement derart zu gestalten, dass eine Drehung des Gleitstabs unterbunden ist.

In den Zeichnungen ist ein nachfolgend näher beschriebenes Ausführungsbeispiel der Erfindung dargestellt. Es zeigt:
- Fig. 1: eine Draufsicht auf ein Schneidwerk mit Fördergurten, die einen erfindungsgemäßen Spannmechanismus aufweisen,
- Fig. 2: eine Draufsicht auf den Spannmechanismus eines der Fördergurte des Schneidwerks der Figur 1,
- Fig. 3: eine perspektivische Ansicht des in Figur 2 gezeigten Spannmechanismus,
- Fig. 4: eine Explosionszeichnung einer Gleitklammer und einer Hülse zur Befestigung der mitlaufenden Walze, die zur Spannung des Fördergurtes bewegbar ist,
- Fig. 5: eine perspektivische Ansicht der Gleitklammer, die in den Gleitkanal zur Befestigung der nichtangetriebenen Walze eingebaut ist.

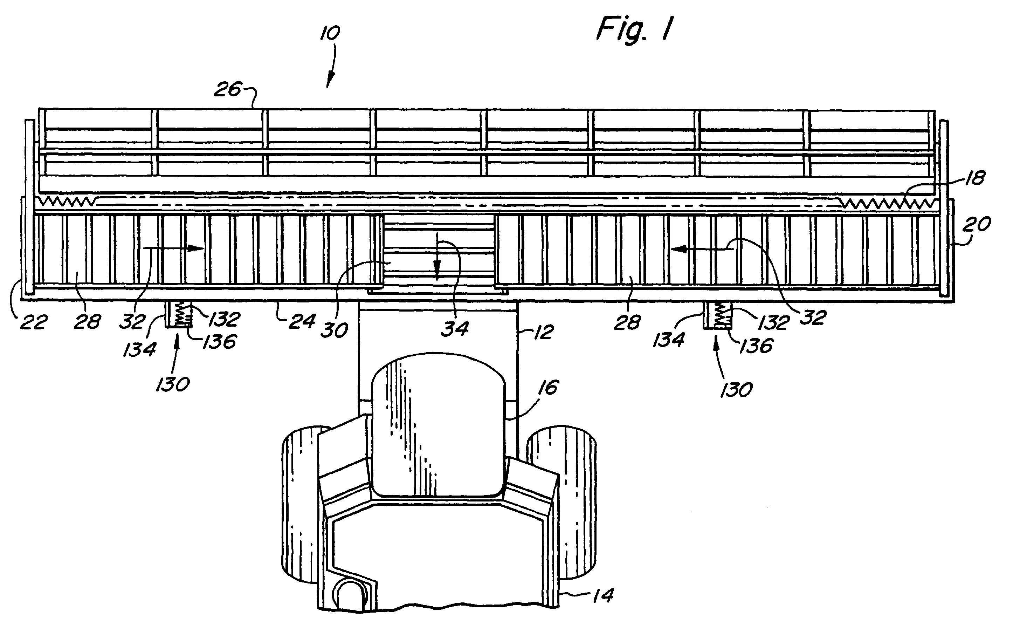

Der erfindungsgemäße Mechanismus zum Spannen des Fördergurtes ist in einem Schneidwerk 10 zur Ernte von Getreide verkörpert, das in Figur 1 gezeigt ist. Das Schneidwerk 10 ist am Schrägförderer 12 eines Mähdreschers 14 angebracht. Der Mähdrescher 14 umfasst eine Kabine 16 für einen Bediener. Der Mechanismus zum Spannen des Fördergurtes gemäß der vorliegenden Erfindung kann an Schneidwerken anderer Typen von Erntemaschinen, wie Schwadlegern, benutzt werden.

Das Schneidwerk 10 umfasst einen Mähwerksbalken 18, voneinander beabstandete Seitenwände 20, 22 und eine Rückwand 24. Eine Haspel 26 dreht sich oberhalb des Mähwerksbalkens 18, um das Erntegut gegen den Mähwerksbalken 18 zu drücken und das Erntegut auf zwei seitliche Fördergurte 28 und einen mittleren Fördergurt 30 zu transportieren. Die zwei seitlichen Fördergurte 28 bewegen das Erntegut seitlich in Richtung auf den mittleren Fördergurt 30 zu, wie anhand der Pfeile 32 gezeigt ist. Der mittlere Fördergurt 30 bewegt das Erntegut in seiner Längsrichtung nach hinten in den Schrägförderer 12, wie anhand des Pfeils 34 gezeigt wird. Jeder der Fördergurte 28, 30 dreht sich um ein Paar von Walzen, eine angetriebene Walze und eine mitlaufende, nicht angetriebene Walze, wie weiter unten beschrieben wird.

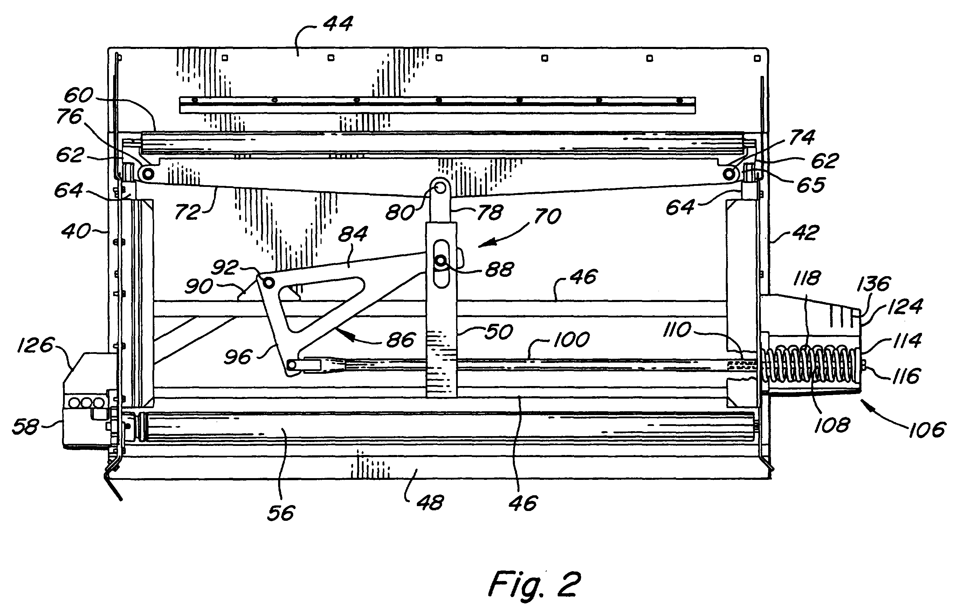

Im folgenden wird auf Figur 2 Bezug genommen, in der der erfindungsgemäße Spannmechanismus der Fördergurte 28, 30 gezeigt wird. Der dargestellte Spannmechanismus wird für den mittleren Fördergurt 30 verwendet. Der Spannmechanismus ist jedoch für alle Fördergurte 28, 30 des Schneidwerks 10 gleich. Der Rahmenaufbau des Schneidwerks 10 umfasst Seitenelemente 40, 42, die sich längs der beiden Seiten des Fördergurtes 30 erstrecken. Ein quer verlaufendes Befestigungselement 44 zur Befestigung des Mähwerksbalkens 18 ist an den vorderen Enden der zwei Seitenelemente 40, 42 angeordnet. Mittlere Querelemente 46 erstrecken sich ebenfalls zwischen den Seitenelementen 40, 42, wie auch ein hinteres Querelement 48. Die mittleren Querelemente 46 tragen ein mittleres Rahmenelement 50, das im wesentlichen parallel zu den Seitenelementen 40, 42 ist. Das mittlere Rahmenelement 50 stellt eine mittlere Unterstützung für den Fördergurt 30 bereit und bietet einen Platz für den Bediener, auf den er sich stellen kann, um verschiedene Teile des Schneidwerks 10 zu erreichen.

Eine angetriebene Walze 56 wird drehbar von den Seitenelementen 40, 42 getragen. Ein Hydraulikmotor 58 versetzt die angetriebene Walze 56 in Drehung. Eine mitlaufende Walze 60 erstreckt sich zwischen den Seitenelementen 40, 42 in der Nähe des quer verlaufenden Befestigungselements 44 zur Befestigung des Mähwerksbalkens 18. Die mitlaufende Walze 60 ist an einem Paar Gleitklammern 62 befestigt, die verschiebbar in Kanalelementen 64 an jedem der beiden Seitenelemente 40, 42 gelagert sind. Die Kanalelemente 64 werden weiter unten detailliert beschrieben. Die Gleitklammern 62 und die Kanalelemente 64 ermöglichen der mitlaufenden Walze 60, sich zur angetriebenen Walze 56 hin- oder von ihr fortzubewegen.

Ein Spannmechanismus 70 für den Fördergurt 30 ist vorgesehen, um die mitlaufende Walze 60 von der angetriebenen Walze 56 fortzudrücken, um eine erwünschte Spannung im Fördergurt 30 zu erzeugen. Der Spannmechanismus 70 umfasst einen Spannbalken 72, der an seinen Enden 74, 76 an den Gleitklammern 62 befestigt ist. Ein verschiebbares Element 78 ist mit der Mitte des Spannbalkens 72 durch einen Stift 80 verbunden. Das verschiebbare Element 78 ist auch an einem Arm 84 eines Winkelhebels 86 durch einen Stift 88 befestigt. Der Winkelhebel 86 ist an einem der Querelemente 46 mittels eines Flansches 90 und eines Stifts 92 drehbar befestigt. Der andere Arm 96 ist an einem Stab 100 befestigt. Eine Drehung des Winkelhebeis 86 um den Stift 92 bewirkt, dass das verschiebbare Element 78 und der Spannbalken 72 sich der angetriebenen Walze 56 entgegen oder von ihr fortbewegen.

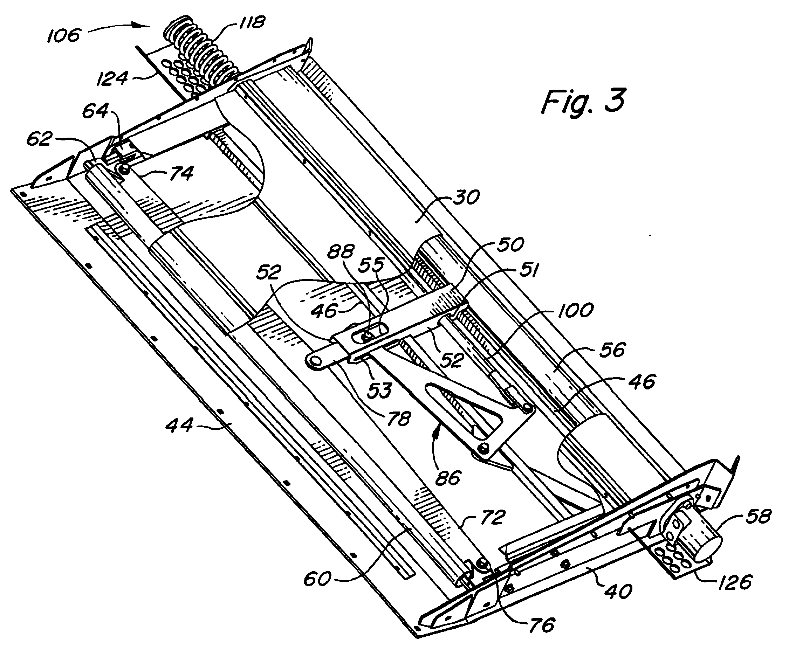

Anhand der Figur 3 ist am besten erkennbar, dass das mittlere Rahmenelement 50 im wesentlichen U-förmig ist. Öffnungen 51 in den Seitenwänden 52 des mittleren Rahmenelements 50 ermöglichen dem Stab 100, sie zu durchdringen. Der Arm 84 des Winkelhebels 86 durchdringt Schlitze 53 in den Seitenwänden 52. Das mittlere Rahmenelement 50 stellt daher eine Abstützung für das Ende des Arms 84 des Winkelhebels 86 bereit. Eine Zugangsöffnung 55 an der Oberseite des mittleren Rahmenelements 50 ermöglicht eine Verbindung zwischen dem Arm 84 des Winkelhebels 86 und dem verschiebbaren Element 78 durch einen Stift 88.

Ein Vorspannmechanismus 106 ist mit dem Stab 100 verbunden, um den Stab 100 vorzuspannen. Das bedingt, dass der Winkelhebel 86 sich dreht und die mitlaufende Walze 60 von der angetriebenen Walze 56 fortgedrückt wird, und somit eine Spannung auf den Fördergurt 30 ausgeübt wird. Der Vorspannmechanismus 106 umfasst eine in das Ende 110 des Stabes 100 gedrehte Schraube 108. Die Schraube 108 erstreckt sich über das Seitenelement 42 hinaus nach außen. Eine große Unterlegscheibe 114 liegt am Kopf 116 der Schraube 108 an. Eine Feder 118 in Form einer Druckfeder ist zwischen der Unterlegscheibe 114 und dem Seitenelement 42 positioniert. Die Feder 118 beaufschlagt die Schraube 108 und den Stab 100 mit einer Kraft, die eine Spannung im Stab 100 erzeugt, so dass sich dadurch der Winkelhebel 86 dreht und die mitlaufende Walze 60 von der angetriebenen Walze 56 weggedrückt wird, und eine Spannung des Fördergurtes 30 erzeugt wird. Die Schraube 108 kann weiter in den Stab 100 hineingeschraubt werden, um die Feder 118 weiter zusammenzudrücken und die Spannung im Stab 100 und im Fördergurt 30 zu vergrößern. Wahlweise kann die Schraube 108 aus dem Ende 110 des Stabes 100 herausgedreht werden, um die Kompression der Feder 118 zu vermindern und auch die Spannung im Fördergurt 30 zu reduzieren. Der Spannmechanismus 70 ist ein aktiver Mechanismus, der die Spannung im Fördergurt 30 stets aufrechterhält. Die mitlaufende Walze 60 wird immer durch die Feder 118 vorgespannt und ist immer in der Lage, sich zur Spannung des Fördergurtes 30 zu bewegen. In dem Fall, das auf den Fördergurt 30 eine äußere Kraft ausgeübt wird, wie bei einem Stoß, der bedingt, dass sich die mitlaufende Walze 60 bewegt, erlaubt die aktive Straffung der mitlaufenden Walze 60, den Fördergurt 30 zur richtigen Spannung zurückzubringen.

Eine Federlehre 124 ist am Seitenelement 42 angebracht und erstreckt sich von letzterem in der Nähe der Feder 118 nach außen. Wenn die Feder 118 zu einer der Länge der Federlehre 124 entsprechenden Länge zusammengedrückt ist, erzeugt die Feder 118 die gewünschte Spannung des Fördergurtes 30. Bei dem mittleren Fördergurt 30 sind die Feder 118 und die Federlehre 124 am Boden des Schneidwerks 10 angeordnet. Die Federlehre 124 ist eine geschweißte Platte, die außerdem als Schutzplatte wirkt, um die Feder 118 und die Schraube 108 vor Beschädigungen durch auftreffende Steine oder andere Objekte am Boden zu schützen. Eine Schutzplatte 126 ist auch bereitgestellt, um den Hydraulikmotor 58 zu schützen.

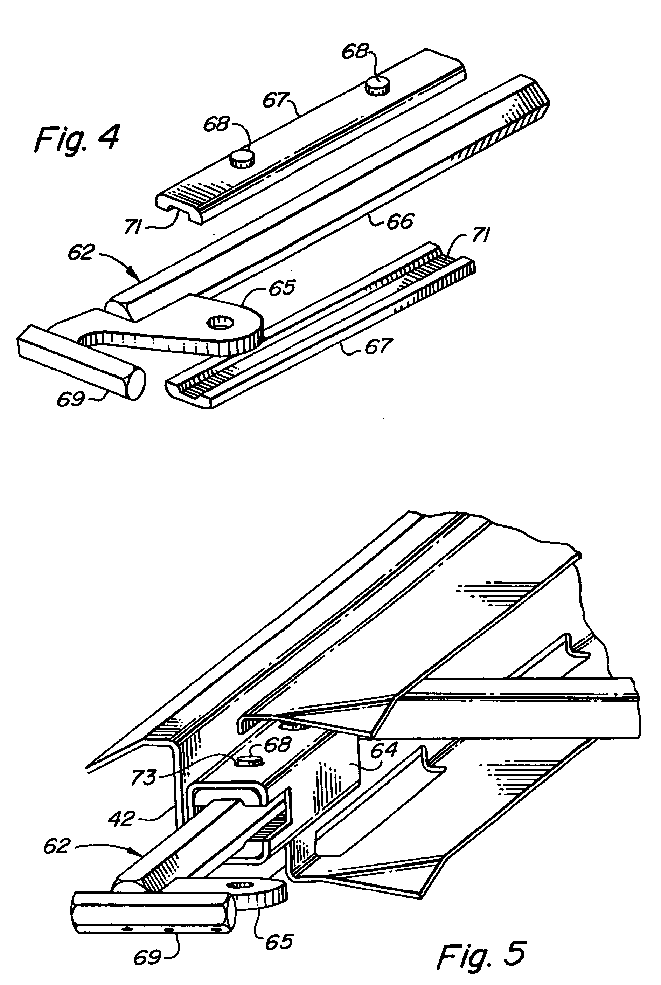

Die Gleitklammer 62 und das Kanalelement 64 sind detaillierter in den Figuren 4 und 5 gezeigt. Die Gleitklammer 62 weist einen Flansch 65 auf, an den der Spannbalken 72 durch Stifte befestigt ist. Ein sechskantförmiger Gleitstab 66 erstreckt sich längs durch das Seitenelement 42 und innerhalb des Kanalelements 64. Ein quer verlaufender Stutzen 69 haltert die mitlaufende Walze 60 drehbar. Das Kanalelement 64 ist am Seitenelement 42 angebracht. Das Kanalelement 64 ist ein quadratisches Rohr mit einem darin angeordneten Paar von Lagerhälften 67 aus Kunststoff. Die Lagerhälften 67 sind an ihren inneren Oberflächen derart geformt, dass sie mit dem sechseckigen Querschnitt des Gleitstabs 66 der Gleitklammer 62 übereinstimmen. Die äußeren Oberflächen der Lagerhälften 67 passen mit dem Inneren des Kanalelements 64 zusammen. Die Lagerhälften 67 haben abstehende Stutzen 68, die sich durch Öffnungen 73 im Kanalelement 64 erstrecken, um die Lagerhälften 67 innerhalb des Kanalelements 64 an Ort und Stelle zu halten.

Wenn der Gleitstab 66 zwischen den Lagerhälften angeordnet ist, können die Stutzen 68 nicht aus den Öffnungen im Kanalelement 64 entfernt werden und halten somit die Lagerhälften fest. Der Gleitstab 66 gleitet innerhalb der Lagerhälften 67, wenn die mitlaufende Walze 60 sich zur angetriebenen Walze 56 hin- oder von ihr fortbewegt. Die Lagerhälften sind vorzugsweise aus einem Polymer mit niedrigem Reibungskoeffizienten hergestellt, wie einem Delrin-Acetal-Harz, um das Gleiten der Gleitklammer 62 innerhalb des Kanalelements 64 zu erleichtern. Identische Gleitklammern 62 und Kanalelemente 64 sind an beiden Enden der mitlaufenden Walze 60 bereitgestellt.

Der Spannmechanismus 70 ist im Innenraum des Fördergurtes 30 enthalten, außer dem Vorspannmechanismus 106, der sich über das Seitenelement 42 hinaus erstreckt. Identische Spannmechanismen sind für die zwei seitlichen Fördergurte 28 bereitgestellt. Die Längen des verschiebbaren Elements 78 und des mittleren Rahmenelements 50 werden bei anderen Fördergurten variieren, abhängig von der Länge der Fördergurte. In jeder anderen Hinsicht sind die Spannmechanismen gleich. Der Spannmechanismus für die Fördergurte 28 umfasst Vorspannmechanismen 130, die sich von der Rückwand 24 des Schneidwerks 10 nach hinten erstrecken. Jeder der Vorspannmechanismen 130 umfasst eine Feder 132 und eine Federlehre 134, die von der Rückwand 24 entlang der Feder 132 absteht. Vorzugsweise sind die Federn 132 und die Federlehren 134 in Positionen angeordnet, die für einen Bediener in der Kabine 16 des zugeordneten Mähdreschers oder anderen Erntefahrzeugs einsehbar sind. Diese Positionierung der Federn 132 ermöglicht dem Bediener, leicht festzustellen, ob sich die Spannung der Fördergurte 28 geändert hat. Die Federlehren 124, 134 können mit Zeichen 136 versehen sein, die Grade größerer Spannung anzeigen, um den Bediener zu unterstützen, wenn er die Spannung der Fördergurte aufgrund höherer Erntegutbelastungen erhöht.

Änderungen des Spannmechanismus 70 des Fördergurts 28, 30 können vorgenommen werden. Beispielsweise können die Seitenelemente 40, 42 Teile eines separaten Rahmens für den eigentlichen Fördergurt 28, 30 und nicht Teil des Rahmens des Schneidwerks 10 sein.

## Patentansprüche

1. Schneidwerk (10) mit einem Fördergurt (28, 30) und einem Spannmechanismus (70), mit zwei Walzen (56, 60), um die der Fördergurt (28, 30) umläuft, von denen wenigstens eine antreibbar ist, und von denen eine erste Walze (60) relativ zur zweiten Walze (56) in Längsrichtung des Fördergurtes (28, 30) verschiebbar gelagert ist, dadurch gekennzeichnet, dass eine Feder (116) die erste Walze (60) mit einer von der zweiten Walze (60) fortgerichteten Kraft beaufschlagt.

2. Schneidwerk (10) nach Anspruch 1, dadurch gekennzeichnet, dass die zweite Walze (60) antreibbar ist.

3. Schneidwerk (10) nach Anspruch 1 oder 2, dadurch gekennzeichnet, dass die Feder (116) einen Winkelhebel (86) vorzugsweise über einen Stab (100) mit einem Drehmoment beaufschlagt, und dass zwischen dem Winkelhebel (86) und einer Lagerung der ersten Walze (60) eine Verbindung vorgesehen ist, die die erste Walze (60) bei einer Drehung des Winkelhebels (86) verschiebt.

4. Schneidwerk (10) nach Anspruch 3, dadurch gekennzeichnet, dass die erste Walze (60) an beiden Enden je an einer Gleitklammer (62) gelagert ist, und dass die Gleitklammern (62) relativ zur zweiten Walze (56) verschiebbar sind und über einen Spannbalken (72) untereinander und mit dem Winkelhebel (86) verbunden sind.

5. Schneidwerk (10) nach Anspruch 4, dadurch gekennzeichnet, dass der Winkelhebel (86) an der Mitte des Spannbalkens (72) angreift.

6. Schneidwerk (10) nach einem der vorhergehenden Ansprüche, dadurch gekennzeichnet, dass der die Feder (116) mit der ersten Walze (60) verbindende Mechanismus im Innenraum des Fördergurtes (28, 30) angeordnet ist.

7. Schneidwerk (10) nach einem der Ansprüche 3 bis 6, dadurch gekennzeichnet, dass sich der Stab (100) bis außerhalb eines Seitenelements (42) eines den Fördergurt (28, 30) tragenden Rahmens erstreckt, und dass die Feder (116) außerhalb des Rahmens angeordnet ist.

8. Schneidwerk (10) nach Anspruch 7, gekennzeichnet durch eine in der Nähe der Feder (116) über den Rahmen hervorstehende Federlehre (134), die die jeweilige Länge der Feder (116) visuell erkennbar macht.

9. Schneidwerk (10) nach Anspruch 8, gekennzeichnet durch Zeichen (136) an der Federlehre (134), die Grade größerer Spannung der Feder (116) anzeigen.

10. Schneidwerk (10) nach Anspruch 7, 8 oder 9, dadurch gekennzeichnet, dass die Feder (116) und/oder die Federlehre (134) sich vom Rahmen des Schneidwerks (10) nach hinten in den Sichtbereich eines Bedieners in einer Kabine (18) eines mit dem Schneidwerk (10) verbundenen Erntefahrzeugs (14) erstrecken.

11. Schneidwerk (10) nach einem der vorhergehenden Ansprüche, dadurch gekennzeichnet, dass die Spannung der Feder (116) vorzugsweise durch eine Schraube (108) verstellbar ist.

12. Schneidwerk (10) nach einem der vorhergehenden Ansprüche, dadurch gekennzeichnet, dass eine verschiebbare Lagerung der ersten Walze (60) eine die erste Walze (60) halternde Gleitklammer (62) umfasst, die einen Gleitstab (66) umfasst, der in einem Kanalelement (64) verschiebbar gelagert ist, wobei das Kanalelement (64) an einem Seitenelement (40, 42) eines den Fördergurt (28, 30) tragenden Rahmens angebracht ist.

13. Schneidwerk (10) nach Anspruch 12, gekennzeichnet durch eine Lagerung, vorzugsweise aus zwei Lagerhälften (67), die den Gleitstab (66) verschiebbar im Kanalelement (60) lagert.

14. Schneidwerk (10) nach Anspruch 13, dadurch gekennzeichnet, dass der Außenquerschnitt des Gleitstabs (66) nicht kreisförmig, vorzugsweise hexagonal, ist, und dass eine Drehung des Gleitstabs (66) in der Lagerung unterbunden ist.
